# FASCICULE DE BREVET EUROPEEN

(11) **EP 2 016 120 B1**
(45) Date de publication et mention de la délivrance du brevet: **23.03.2016**
(21) Numéro de dépôt: 07728975.9
(22) Date de dépôt: 10.05.2007
(51) Int. Cl.: C09J 5/02

(54) **PROCEDE POUR AMELIORER LA TENUE MECANIQUE DE COLLAGES REALISES AVEC UN ADHESIF A BASE D'UNE RESINE DURCISSABLE PAR POLYMERISATION EN CHAINE**
VERFAHREN ZUR VERBESSERUNG DER MECHANISCHEN FESTIGKEIT VON VERKLEBUNGEN MIT EINEM KLEBSTOFF AUF BASIS VON HÄRTBAREM HARZ DURCH KETTENPOLYMERISATION
METHOD FOR IMPROVING MECHANICAL STRENGTH OF BONDINGS MADE WITH AN ADHESIVE BASED ON CURABLE RESIN BY CHAIN POLYMERIZATION

(30) Priorité: 11.05.2006 FR 0651700
(43) Date de publication de la demande: 21.01.2009
(73) Titulaire: Airbus Defence and Space SAS, 78130 Les Mureaux (FR); UNIVERSITE DES SCIENCES ET TECHNOLOGIES DE LILLE, 59655 Villeneuve-d'Ascq Cedex (FR)
(72) Inventeur: DEFOORT, Brigitte, 33160 Saint Medard en Jalles (FR); PONSAUD, Philippe, 75013 Paris (FR); COCQUERET, Xavier, 59133 Phalempin (FR)
(74) Mandataire: Ilgart, Jean-Christophe
(86) Numéro de dépôt international: PCT/EP2007/054523
(87) Numéro de publication internationale: WO 2007/131935

(56) Documents cités:
- WO-A-97/49756
- FR-A1- 2 879 208
- US-A1- 6 037 008

## Description

### DOMAINE TECHNIQUE

La présente invention se rapporte à un procédé permettant d'améliorer la tenue mécanique de collages entre des substrats lorsque ces collages sont réalisés au moyen d'un adhésif qui comprend une résine durcissable par polymérisation en chaîne, et en particulier une résine durcissable sous l'effet d'un rayonnement lumineux ou ionisant.

Ce procédé, qui permet d'obtenir des assemblages de pièces aux propriétés remarquables de résistance aux sollicitations, tant transverses que longitudinales, trouve un intérêt tout particulier dans les industries aéronautique, spatiale, ferroviaire, navale et automobile, que ce soit pour l'assemblage de pièces de structure, de moteur, d'habitacle ou de carrosserie.

### ÉTAT DE LA TECHNIQUE ANTÉRIEURE

Dans l'industrie, l'assemblage de pièces par collage s'est développé ces dernières années au détriment des méthodes traditionnelles d'assemblage par voie mécanique, par exemple du type vis, écrous-boulons ou rivets.

Cette évolution a notamment été rendue possible par l'arrivée sur le marché de nouveaux adhésifs au temps de durcissement considérablement réduit et, donc, compatible avec les contraintes de fabrication des domaines concernés comme, par exemple, une utilisation en chaînes de fabrication.

Un certain nombre de ces adhésifs ont pour principal constituant, une résine qui durcit par polymérisation en chaîne. Sauf dans le cas où il est induit par un faisceau d'électrons, ce type de polymérisation exige la présence, dans la résine, d'un amorceur qui permet de créer, à partir de quelques molécules de monomère, des centres actifs dont l'activité va ensuite se propager à d'autres molécules de monomère, provoquant ainsi une réaction de polymérisation en chaîne. Les centres actifs peuvent être des radicaux ou des ions. On distingue donc deux types de polymérisation en chaîne : radicalaire et ionique.

Lors d'une polymérisation en chaîne se produisent notamment des réactions de transfert. A la différence de réactions de terminaison qui, par destruction irréversible des centres actifs, arrêtent la croissance des chaînes macromoléculaires, les réactions de transfert permettent le redémarrage de nouvelles chaînes. Ce phénomène peut être exploité pour contrôler la masse moléculaire moyenne des polymères qui se forment de façon à obtenir des réseaux tridimensionnels aux propriétés améliorées.

Ce contrôle est usuellement réalisé par l'utilisation d'agents de transfert de chaîne dont le rôle est de provoquer la terminaison de la croissance des chaînes et simultanément de redémarrer de nouvelles chaînes.

Des exemples d'agents de transfert de chaîne sont donnés par G. ODIAN dans "La polymérisation, principes et applications", 3ème édition, Ed. Polytechnica, 1994, page 277.

Par ailleurs, la polymérisation de la résine et, donc, son durcissement peuvent être induits soit par la chaleur, soit par une réaction d'oxydoréduction, soit encore par un rayonnement lumineux (lumière visible ou ultraviolette) ou ionisant (rayonnement β, γ ou rayons X).

L'utilisation d'adhésifs durcissables sous l'effet d'un rayonnement lumineux ou ionisant présente un certain nombre d'avantages par rapport à celle d'adhésifs durcissables par la chaleur, ces avantages étant notamment liés à la possibilité, d'une part, de travailler sans autoclave, ce qui est particulièrement appréciable dans le cas de collages de pièces de grandes dimensions, et, d'autre part, d'obtenir des vitesses de polymérisation plus élevées, ce qui permet des cadences de production supérieures pour des coûts inférieurs.

Par contre, l'expérience montre que la tenue mécanique de collages réalisés avec des adhésifs dont le durcissement a été obtenu par application d'un rayonnement lumineux ou ionisant est très nettement inférieure à celle de collages réalisés au moyen d'adhésifs dont le durcissement a été obtenu par voie thermique. Leur faciès de rupture est, de plus, défavorable puisqu'il s'agit d'une rupture adhésive et non pas, cohésive.

Les Inventeurs se sont, donc, fixé pour but de fournir un procédé qui permette d'améliorer la tenue mécanique de collages entre des substrats lorsque ces collages sont réalisés avec un adhésif comprenant une résine durcissable par rayonnement, et plus précisément, une résine durcissable par polymérisation en chaîne puisque, en pratique, les adhésifs aptes à durcir sous l'effet d'un rayonnement sont à base de résines dont la polymérisation s'effectue par un mécanisme en chaîne.

Ils se sont, de plus, fixé pour but que ce procédé soit en particulier applicable au collage de substrats en résine époxyde ou en un matériau composite à matrice époxyde (carbone-époxyde, kevlar-époxyde, graphite-époxyde, ...) qui correspondent aux types de substrats les plus fréquemment utilisés dans les industries aéronautique et spatiale.

Ils se sont, en outre, fixé que les modalités et les coûts de mise en oeuvre de ce procédé soient compatibles avec son exploitation à une échelle industrielle.

Il est connu par US 6,037,008 un primaire d'adhésion aqueux, à base d'un organosilane insoluble ou légèrement soluble dans l'eau, qui est destiné à favoriser l'adhésion de points d'adhésifs ou de revêtements polymères sur des substrats en verre, en métal, en béton ou en matière plastique.

Il est, par ailleurs, connu par WO 97/49756 un procédé pour coller un matériau en résine synthétique ou en caoutchouc sur la surface d'un élément métallique, qui consiste à traiter la surface de l'élément métallique avec un composé organique comprenant au moins un groupe carboxylique ou anhydride d'acide carboxylique et au moins un groupe mercapto, puis à greffer sur cette surface un film d'une résine permettant ensuite de coller ledit matériau en résine synthétique ou en caoutchouc par thermofusion.

### EXPOSÉ DE L'INVENTION

Les buts exposés ci-dessus, et d'autres encore, sont atteints par la présente invention qui propose un procédé pour améliorer la tenue mécanique d'un collage entre des substrats lorsque ce collage est réalisé au moyen d'un adhésif comprenant une résine durcissable par polymérisation en chaîne, lequel procédé est caractérisé en ce qu'il comprend le greffage sur la surface des substrats, avant que ceux-ci ne soient mis en contact avec l'adhésif, de groupes aptes à servir d'agents de transfert de chaîne lors de la polymérisation de ladite résine.

Dans ce qui précède et ce qui suit, le terme *"polymérisation"* doit être compris comme comprenant non seulement la formation de chaînes polymères par liaison de monomères ou de prépolymères entre eux, mais également la formation d'un réseau tridimensionnel par l'établissement de liaisons entre ces chaînes polymères, que l'on appelle communément réticulation.

Ainsi, selon l'invention, on améliore la tenue du collage entre des substrats en augmentant l'adhérence de ces substrats vis-à-vis de l'adhésif et ce, en greffant sur la surface des substrats, avant qu'ils ne soient mis au contact de l'adhésif (c'est-à-dire, en pratique, avant que ne soit déposé l'adhésif sur la surface ou la partie de surface où doit s'effectuer le collage), des groupes organiques capables de jouer le rôle d'agents de transfert de chaîne pendant la polymérisation de la résine durcissable présente dans l'adhésif.

En l'état actuel de leurs travaux, les Inventeurs pensent que l'augmentation de l'adhérence substrats/adhésif serait liée au fait que les groupes greffés sur la surface de ces substrats se transformeraient, au cours de la polymérisation de la résine, en centres actifs (c'est-à-dire en radicaux ou en ions selon que la polymérisation en chaîne est de type radicalaire ou de type ionique) par réaction avec des chaînes polymères en croissance, et que ces centres actifs seraient capables d'amorcer la formation de nouvelles chaînes polymères à partir de la surface des substrats, qui seraient alors liées de façon covalente à cette surface dès leur création.

Ce mécanisme présumé peut être illustré schématiquement de la manière suivante : 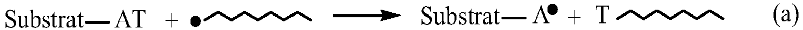 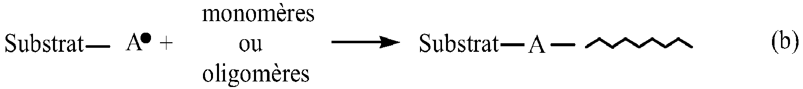 où :
AT représente un groupe servant d'agent de transfert de chaîne qui est lié chimiquement à la surface du substrat,
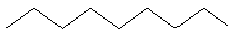 représente une chaîne polymère,
l'étape (a) illustre la transformation de ce groupe en centre actif, et
l'étape (b) illustre la formation d'une nouvelle chaîne polymère à partir de la surface du substrat.

Conformément à l'invention, les groupes que l'on greffe sur la surface des substrats peuvent être choisis parmi les nombreux groupes connus pour être aptes à servir d'agents de transfert de chaîne dans une polymérisation en chaîne, étant entendu que l'on retiendra, de préférence, ceux permettant d'obtenir une adhérence substrats/adhésif la plus satisfaisante possible. Pour ce faire, il est tout à fait possible d'évaluer l'effet de groupes de différents types sur l'adhérence de substrats vis-à-vis d'un adhésif particulier, par exemple en soumettant des assemblages obtenus en collant ensemble, avec cet adhésif, deux échantillons représentatifs de ces substrats, sur la surface desquels on aura préalablement greffé des groupes de l'un de ces types, à un test de traction et en comparant les résultats obtenus pour chaque type de groupes greffés. Un exemple de test de traction utilisable à cet effet est décrit dans l'exemple 1 ci-après.

Comme groupes aptes à servir d'agents de transfert de chaîne dans une polymérisation en chaîne, on peut notamment citer les groupes carbonés comprenant une fonction -I, -Br, -Cl, -F, -SH, -OH, -NH-, -NH₂, -PH-, -PH₂ ou =S ainsi que les groupes carbonés dénués d'hétéroatome mais pouvant donner lieu à un transfert radicalaire comme, par exemple, les groupes -CH allyliques ou benzyliques éventuellement substitués.

Toutefois, il s'avère que, dans le cadre de leurs travaux, les Inventeurs ont constaté que le greffage de groupes carbonés comprenant une fonction thiol permet d'obtenir une amélioration particulièrement significative de l'adhérence de substrats vis-à-vis d'adhésifs comprenant une résine durcissable par polymérisation en chaîne, et notamment lorsque les substrats sont en résine époxyde ou en un matériau composite à matrice époxyde tandis que l'adhésif est à base d'une résine de type multiacrylate telle qu'une résine époxy acrylate.

Aussi, les groupes carbonés à fonction thiol sont-ils ceux que l'on préfère greffer dans le procédé selon l'invention.

Conformément à l'invention, le greffage sur la surface des substrats des groupes aptes à servir d'agents de transfert de chaîne peut être réalisé en faisant réagir les groupes fonctionnels présents sur cette surface ou certains de ces groupes (s'ils ne sont pas tous identiques entre eux) avec un composé organique qui, soit comprend un groupe apte à servir d'agent de transfert de chaîne, soit génère, au cours de la réaction, un tel groupe.

Le choix de ce composé organique est conditionné par le ou les types de groupes fonctionnels présents à la surface des substrats, ce ou ces groupes pouvant être les groupes que portent naturellement les substrats de par le matériau qui les constitue, ou des groupes que l'on créée volontairement en soumettant les substrats à un traitement approprié.

Ainsi, par exemple, des substrats en résine époxyde ou en un matériau composite à matrice époxyde présentent naturellement des groupes époxydes disponibles sur leur surface, alors qu'il sera nécessaire, dans le cas de substrats en carbone, de créer à la surface de ces substrats des groupes oxygénés tels que des groupes hydroxyles, cétones, carboxyles ou éthers, par exemple par une oxydation chimique ou électrolytique.

Dans un premier mode de mise en oeuvre préféré du procédé selon l'invention, le greffage sur la surface des substrats des groupes aptes à servir d'agents de transfert de chaîne est réalisé en faisant réagir des groupes fonctionnels présents à la surface de ces substrats avec un composé organique qui comporte à la fois une fonction chimique apte à réagir avec lesdits groupes fonctionnels, et un groupe apte à servir d'agent de transfert de chaîne.

Ainsi, par exemple, dans le cas où l'on souhaite greffer des groupes carbonés à fonction thiol sur la surface de substrats comportant des groupes époxydes, on réalise ce greffage en utilisant un composé organique comportant, d'une part, une fonction chimique apte à réagir avec des groupes époxydes, et, d'autre part, un groupe carboné comprenant une fonction thiol.

La fonction chimique apte à réagir avec des groupes époxydes est, de préférence, une fonction carboxyle ou phénol et la réaction est avantageusement réalisée à chaud (par exemple, à une température de 150°C), sous vide et en présence d'un catalyseur, de préférence une amine tertiaire comme le méthacrylate de 2-diméthylaminoéthyle.

Un composé organique ayant à la fois une fonction carboxyle et un groupe à fonction thiol est, par exemple, l'acide thiomalique, l'acide thioglycolique, l'acide thiolactique, l'acide 3-mercaptopropionique, l'acide 11-mercaptoundécanoïque, l'acide 16-mercaptohexadécanoïque, l'acide 2-mercaptonicotinique, l'acide 6-mercaptonicotinique ou l'acide 2-mercapto-4-méthyl-5-thiazoleacétique, tandis qu'un composé ayant à la fois une fonction phénol et un groupe à fonction thiol est, par exemple, le 2-mercaptophénol, le 3-mercaptophénol, le 4-mercapto-phénol ou le 4-thiouracyle.

Dans un autre mode de mise en oeuvre préféré du procédé selon l'invention, le greffage sur la surface des substrats des groupes aptes à servir d'agents de transfert de chaîne est réalisé en faisant réagir des groupes fonctionnels présents à la surface de ces substrats avec un composé organique cyclique qui, par ouverture de cycle, se lie de façon covalente aux groupements fonctionnels des substrats et génère simultanément un groupe apte à servir d'agent de transfert de chaîne.

Ainsi, par exemple, dans le cas où l'on souhaite greffer des groupes carbonés à fonction thiol sur la surface de substrats qui comprennent notamment des groupes carboxyles, on réalise ce greffage en faisant réagir ces derniers avec un épisulfure qui, par ouverture de cycle, se lie de façon covalente à une fonction carboxyle et génère simultanément un groupe à fonction thiol.

L'épisulfure est, par exemple, le sulfure de propylène, le sulfure d'éthylène, le sulfure de cyclohexène, l'épithiodécane, l'épithiododécane ou le 7-thiabicyclo[4.1.0]heptane, et la réaction est avantageusement réalisée à chaud (par exemple, à une température de l'ordre de 100°C), en présence d'un catalyseur, de préférence une amine tertiaire telle que la triéthylamine.

En tout état de cause, il entre dans les compétences normales d'un homme du métier du domaine du couplage de fonctions chimiques de savoir déterminer, en fonction des groupes fonctionnels présents à la surface des substrats qu'il entend coller, quels sont les composés propres à lui permettre de greffer sur la surface de ces substrats les groupes de son choix, et de fixer les conditions dans lesquelles le greffage doit être réalisé pour être efficace, notamment en ce qui concerne les proportions de réactif(s) et de catalyseur(s) devant être utilisées, ainsi que les paramètres de température et de pression nécessaires au bon déroulement de ce greffage.

L'invention a aussi pour objet un procédé de collage de substrats au moyen d'un adhésif comprenant une résine durcissable par polymérisation en chaîne, qui est caractérisé en ce qu'il comprend la mise en oeuvre d'un procédé pour améliorer la tenue mécanique d'un collage tel que défini ci-avant.

A cet égard, il convient de noter qu'il n'est pas nécessaire de procéder au collage des substrats immédiatement après avoir greffé sur leur surface les groupes aptes à servir d'agents de transfert de chaîne et que les substrats, une fois greffés, peuvent parfaitement être conservés plusieurs jours ou plusieurs semaines avant d'être collés.

Conformément à l'invention, la résine durcissable présente dans l'adhésif peut être choisie parmi toutes les résines qui sont aptes à durcir par un mécanisme de polymérisation en chaîne et ce, que ce soit sous l'effet de la chaleur ou sous l'effet d'un rayonnement lumineux ou ionisant, les Inventeurs ayant, en effet constaté que le procédé selon l'invention est efficace aussi bien dans le cas d'une résine thermodurcissable que d'une résine photo- ou radio-durcissable.

Toutefois, pour les raisons précédemment exposées, la résine est, de préférence, choisie parmi les résines polymérisables sous l'effet d'un rayonnement lumineux ou ionisant, et en particulier parmi les résines de type multiacrylates comme les résines époxy acrylates, les novolaque acrylates et les polyuréthanne acrylates, les résines bis-maléimides et les résines époxydes.

Dans un mode de mise en oeuvre particulièrement préféré du procédé selon l'invention, les substrats sont en résine époxyde ou en un matériau composite à matrice époxyde, tandis que la résine durcissable présente dans l'adhésif est une résine époxy acrylate.

D'autres caractéristiques et avantages du procédé selon l'invention apparaîtront mieux à la lecture du complément de description qui suit, qui se rapporte à un exemple de mise en oeuvre de ce procédé, et qui se réfère aux figures annexées.

Bien entendu, cet exemple n'est donné qu'à titre d'illustration de l'objet de l'invention et ne constitue en aucun cas une limitation de cet objet.

### BRÈVE DESCRIPTION DES FIGURES

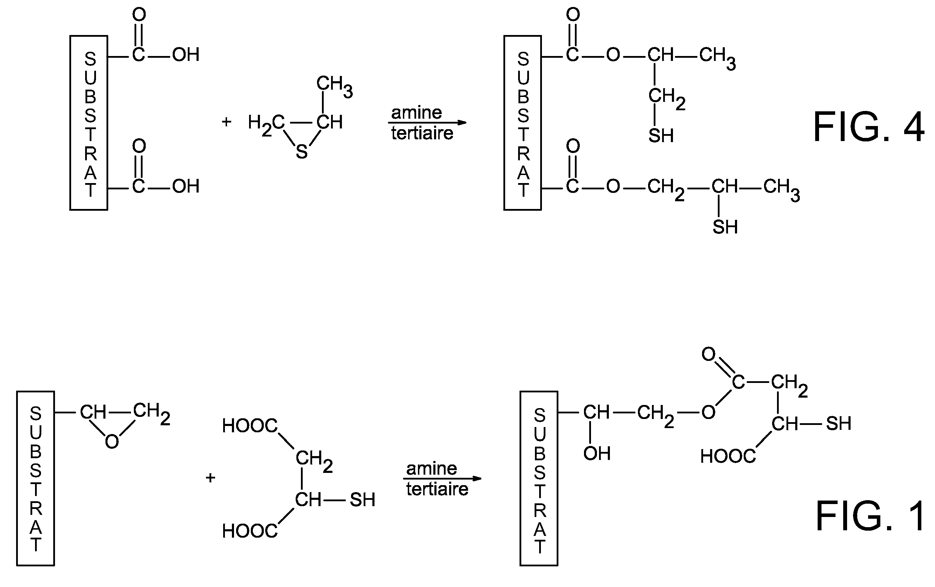

La figure 1 illustre schématiquement un premier exemple d'une réaction permettant de greffer des groupes à fonction thiol sur la surface d'un substrat, dans lequel une fonction époxyde située à la surface du substrat est mise à réagir avec de l'acide thiomalique en présence d'une amine tertiaire.

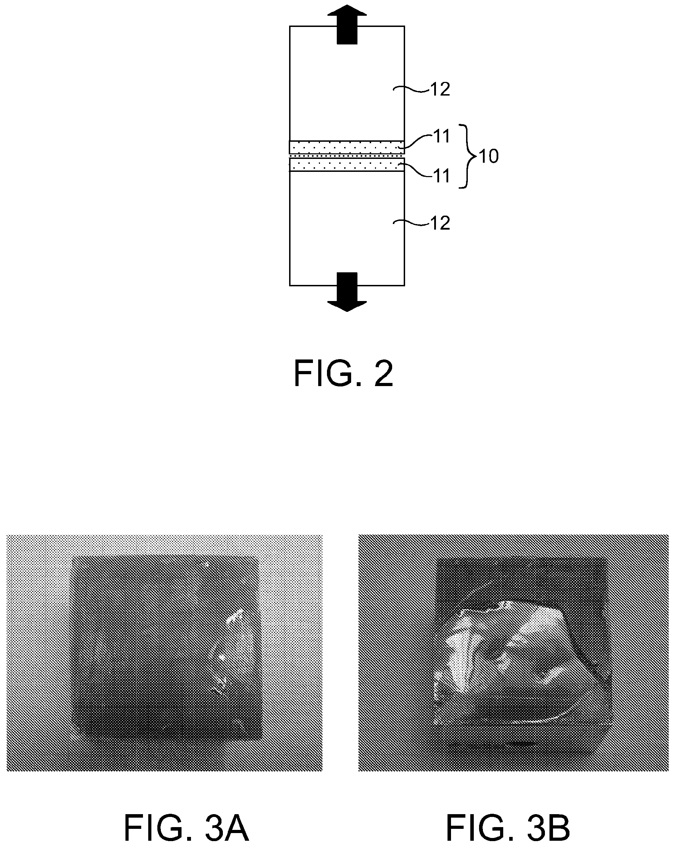

La figure 2 représente schématiquement le principe du test de traction utilisé dans le cadre de l'invention pour apprécier la tenue mécanique d'un collage entre deux substrats.
Les figures 3A et 3B correspondent à deux clichés qui montrent les faciès de rupture obtenus en soumettant des sandwichs, formés de deux substrats collés l'un à l'autre par l'intermédiaire d'une couche de résine, au test de traction dont le principe est illustré sur la figure 2, selon que ces substrats ont été (figure 3B) ou non (figure 3A) préalablement traités par le procédé selon l'invention.
La figure 4 illustre schématiquement un deuxième exemple d'une réaction permettant de greffer des groupes à fonction thiol sur la surface d'un substrat, dans lequel une fonction carboxyle située à la surface du substrat est mise à réagir avec du sulfure de propylène en présence d'une amine tertiaire. Cette figure montre la structure chimique des deux types de groupe à fonction thiol présumés pouvoir se fixer à la surface du substrat au cours de cette réaction.

### EXPOSÉ DÉTAILLÉ D'UN MODE DE MISE EN OEUVRE PREFERE DE L'INVENTION

Cet exemple est relatif au greffage de groupes à fonction thiol sur la surface de substrats en résine époxyde et à l'effet de ce greffage sur la tenue mécanique de collages réalisés entre ces substrats au moyen d'un résine époxy acrylate durcissable sous rayonnement.

Le greffage des groupes à fonction thiol est réalisé en faisant réagir les fonctions époxydes disponibles à la surface des substrats avec de l'acide thiomalique, en présence d'une amine tertiaire, selon le schéma réactionnel illustré sur la figure 1.

Les conditions expérimentales sont les suivantes.

On réalise des plaques en résine époxyde de 2 mm d'épaisseur en induisant la polymérisation cationique d'une résine époxyde de type diglycidyl éther de bisphénol A (résine DER330 de la société DOW CHEMICAL avec sel d'iodonium) par application d'une radiation de 10 kGy. Les plaques ainsi obtenues possèdent une conversion estimée entre 0,5 et 0,6 et une température de transition vitreuse d'environ 60°C. Elles présentent donc une assez grande quantité de fonctions époxydes disponibles sur leur surface.

On découpe dans ces plaques des échantillons carrés de 50 mm de côté dont on ponce une face avec un papier abrasif fin (grain 600).

On enduit au pinceau la face poncée de certains de ces échantillons d'une solution d'acide thiomalique à 10% en masse et de méthacrylate de 2-diméthylaminoéthyle à 0,5 % en masse dans de la méthyléthylcétone, puis on soumet les échantillons ainsi enduits à un traitement thermique à 150°C pendant 30 min, sous vide, après une montée en température de 45 min.

On réalise des sandwichs formés de deux échantillons collés l'un à l'autre par une fine couche de résine époxy acrylate (EB600 de la société UCB Chemicals), en appliquant deux échantillons l'un sur l'autre après avoir placé entre eux quelques gouttes de la résine préalablement chauffée à 90°C, puis en plaçant le tout dans une vessie sous vide (1 bar) pour permettre à la résine de fluer en une fine couche entre les deux échantillons, et enfin en induisant la polymérisation de la résine par application de quatre irradiations de 25 kGy chacune, à température ambiante et sous vide (1 bar).

A des fins comparatives, on réalise aussi des sandwichs en suivant le même protocole opératoire mais en utilisant des échantillons de résine époxyde n'ayant pas subi de greffage.

Pour apprécier la tenue mécanique des collages ainsi réalisés, on colle, comme montré par la figure 2, chacun des échantillons 11 d'un même sandwich 10 à un pavé de traction 12 avec un adhésif à base d'une résine époxyde amine (EA 9321 de la société STRUCTIL) qui polymérise en 24 heures, à température ambiante et sous vide (1 bar). Puis, on soumet les pavés à une sollicitation en traction, qui est symbolisée par les deux flèches noires de la figure 2, sur un banc Instron 5500R, assisté du logiciel BlueHill. La vitesse de sollicitation est de 1 mm/min. La charge et la contrainte à la rupture sont ainsi évaluées.

Les résultats montrent que, dans le cas où les échantillons de résine époxyde ont été préalablement greffés de groupes à fonction thiol, la contrainte à la rupture des collages est plus de deux fois supérieure à celle obtenue pour les collages réalisés entre des échantillons n'ayant pas subi de greffage (9,5 MPa *versus* 4,5 MPa), ce qui traduit une amélioration très nette de l'adhérence entre les échantillons et la résine époxy acrylate utilisée comme adhésif.

Par ailleurs, comme le montre la figure 3B sur laquelle on distingue nettement, en négatif, des fragments de résine époxyde arrachés, le faciès de rupture est nettement cohésif dans le cas où les échantillons de résine époxyde ont été préalablement greffés de groupes à fonction thiol, ce qui implique que la résistance au niveau de l'interface entre ces échantillons et la résine époxy acrylate utilisée comme adhésif est supérieure à la résistance intrinsèque de la résine époxyde qui les constituent.

A l'inverse, le faciès de rupture est adhésif dans le cas où les échantillons n'ont pas subi de greffage, la rupture s'effectuant alors au niveau de l'interface entre les échantillons de résine époxyde et la résine époxy acrylate utilisée comme adhésif, ainsi que mis en évidence par la surface lisse visible sur la figure 3A.

L'invention ne se limite pas au mode de mise en oeuvre qui vient être expressément décrit.

Ainsi, par exemple, la figure 4 illustre un autre exemple d'une réaction propre à permettre le greffage de groupes à fonction thiol sur la surface de substrats comportant des groupes carboxyles. De tels substrats sont, par exemple, des substrats en carbone que l'on a préalablement soumis à un traitement d'oxydation chimique ou électrolytique pour créer des groupes fonctionnels oxygénés sur leur surface.

Dans cette réaction, les groupes carboxyles sont mis à réagir avec du sulfure de propylène en présence d'une amine tertiaire, par exemple la triéthylamine.

Comme le montre la figure 4, deux types de groupes à fonction thiol sont, dans ce cas, susceptibles de se fixer à la surface des substrats.

## Revendications

1. Procédé pour améliorer la tenue mécanique d'un collage entre des substrats lorsque ce collage est réalisé au moyen d'un adhésif comprenant une résine durcissable par polymérisation en chaîne, **caractérisé en ce qu'**il comprend le greffage sur la surface des substrats, avant que ceux-ci ne soient mis en contact avec l'adhésif, de groupes aptes à servir d'agents de transfert de chaîne lors de la polymérisation de ladite résine, ces groupes étant choisis parmi les groupes carbonés comprenant une fonction -I, -Br, -Cl, -F, -SH, -OH, -NH-, -NH₂, -PH-, -PH₂ ou =S.

2. Procédé selon la revendication 1, **caractérisé en ce que** les groupes aptes à servir d'agents de transfert de chaîne sont des groupes carbonés comprenant une fonction thiol (-SH).

3. Procédé selon la revendication 1, **caractérisé en ce que** le greffage sur la surface des substrats des groupes aptes à servir d'agents de transfert de chaîne est réalisé en faisant réagir des groupes fonctionnels présents à la surface de ces substrats avec un composé organique qui comporte une fonction chimique apte à réagir avec lesdits groupes fonctionnels, et un groupe apte à servir d'agent de transfert de chaîne.

4. Procédé selon la revendication 3, **caractérisé en ce que** le composé organique a pour groupe apte à servir d'agent de transfert de chaîne, un groupe comprenant une fonction thiol.

5. Procédé selon la revendication 4, **caractérisé en ce que**, les groupes fonctionnels présents à la surface des substrats étant des groupes époxydes, le composé organique a pour fonction chimique, une fonction carboxyle ou une fonction phénol.

6. Procédé selon la revendication 5, **caractérisé en ce que** la réaction des groupes époxydes présents à la surface des substrats avec le composé organique ayant une fonction carboxyle ou phénol est réalisée à chaud, sous vide et en présence d'un catalyseur, de préférence une amine tertiaire.

7. Procédé selon la revendication 5 ou la revendication 6, **caractérisé en ce que** le composé organique est choisi parmi l'acide thiomalique, l'acide thioglycolique, l'acide thiolactique, l'acide 3-mercaptopropionique, l'acide 11-mercaptoundécanoïque, l'acide 16-mercaptohexadécanoïque, l'acide 2-mercaptonicotinique, l'acide 6-mercaptonicotinique et l'acide 2-mercapto-4-méthyl-5-thiazoleacétique.

8. Procédé selon la revendication 1, **caractérisé en ce que** le greffage sur la surface des substrats des groupes aptes à servir d'agents de transfert de chaîne est réalisé en faisant réagir des groupes fonctionnels présents à la surface de ces substrats avec un composé organique qui, par ouverture de cycle, se lie de façon covalente aux groupes fonctionnels des substrats et génère simultanément un groupe apte à servir d'agent de transfert de chaîne.

9. Procédé selon la revendication 8, **caractérisé en ce que**, les groupes fonctionnels présents à la surface des substrats étant des groupes carboxyles, le composé organique est un épisulfure qui génère un groupe comprenant une fonction thiol.

10. Procédé selon la revendication 9, **caractérisé en ce que** l'épisulfure est choisi parmi le sulfure de propylène, le sulfure d'éthylène, le sulfure de cyclohexène, l'épithiodécane, l'épithiododécane et le 7-thiabicyclo[4.1.0]heptane.

11. Procédé selon la revendication 9 ou la revendication 10, **caractérisé en ce que** la réaction des groupes carboxyles présents à la surface des substrats avec l'épisulfure est réalisée à chaud et en présence d'un catalyseur, de préférence une amine tertiaire.

12. Procédé de collage de substrats au moyen d'un adhésif comprenant une résine durcissable par polymérisation en chaîne, **caractérisé en ce qu'**il comprend la mise en oeuvre d'un procédé selon l'une quelconque des revendications 1 à 11.

13. Procédé selon la revendication 12, **caractérisé en ce que** la résine présente dans l'adhésif est choisie parmi les résines polymérisables sous l'effet d'un rayonnement lumineux ou ionisant.

14. Procédé selon la revendication 13, **caractérisé en ce que** la résine présente dans l'adhésif est choisie parmi les résines époxy acrylates, novolaque acrylates, polyuréthanne acrylates, bis-maléimides et époxydes.

15. Procédé selon l'une quelconque des revendications 12 à 14, **caractérisé en ce que** les substrats sont en résine époxyde ou en un matériau composite à matrice époxyde, tandis que la résine durcissable présente dans l'adhésif est une résine époxy acrylate.

## Patentansprüche

1. Verfahren zur Verbesserung der mechanischen Festigkeit einer Verklebung von Substraten, wenn die Verklebung mittels eines Klebstoffs erfolgt, welcher ein durch Kettenpolymerisation härtbares Harz umfasst, **dadurch gekennzeichnet, dass** es das Aufpfropfen von Gruppen, welche während der Polymerisation des Harzes als Kettenübertragungsmittel fungieren können, auf die Oberfläche der Substrate umfasst, bevor diese mit dem Klebstoff in Kontakt gebracht werden, wobei die Gruppen aus kohlenstoffhaltigen Gruppen, welche eine der Funktionen -I, -Br, -Cl, -F, -SH, -OH, -NH-, -NH₂, -PH-, -PH₂ oder =S umfassen, ausgewählt sind.

2. Verfahren nach Anspruch 1, **dadurch gekennzeichnet, dass** die Gruppen, welche als Kettenübertragungsmittel fungieren können, eine Thiolfunktion (-SH) umfassende kohlenstoffhaltige Gruppen sind.

3. Verfahren nach Anspruch 1, **dadurch gekennzeichnet, dass** das Aufpfropfen von Gruppen, welche als Kettenübertragungsmittel fungieren können, auf die Oberfläche der Substrate derart erfolgt, dass man auf der Substratoberfläche bereits vorhandene funktionelle Gruppen mit einer organischen Verbindung reagieren lässt, welche eine zur Reaktion mit den funktionellen Gruppen befähigte chemische Funktion sowie eine Gruppe, die als Kettenübertragungsmittel fungieren kann, umfasst.

4. Verfahren nach Anspruch 3, **dadurch gekennzeichnet, dass** die organische Verbindung als Gruppe, welche als Kettenübertragungsmittel fungieren kann, eine eine Thiolfunktion umfassende Gruppe aufweist.

5. Verfahren nach Anspruch 4, **dadurch gekennzeichnet, dass** die auf der Substratoberfläche vorhandenen funktionellen Gruppen Epoxidgruppen sind und die organische Verbindung als chemische Funktion eine Carboxylfunktion oder eine Phenolfunktion aufweist.

6. Verfahren nach Anspruch 5, **dadurch gekennzeichnet, dass** die Reaktion zwischen den auf der Substratoberfläche vorhandenen Epoxidgruppen und der eine Carboxyl- oder Phenolfunktion aufweisenden organischen Verbindung unter Wärmezufuhr, unter Vakuum, sowie in Gegenwart eines Katalysators, vorzugsweise eines tertiären Amins, durchgeführt wird.

7. Verfahren nach Anspruch 5 oder Anspruch 6, **dadurch gekennzeichnet, dass** die organische Verbindung ausgewählt ist aus Thioapfelsäure, Thioglykolsäure, Thiomilchsäure, 3-Mercaptopropionsäure, 11-Mercaptoundecansäure, 16-Mercaptohexadecansäure, 2-Mercaptonikotinsäure, 6-Mercaptonikotinsäure und 2-Mercapto-4-methyl-5-thiazolessigsäure.

8. Verfahren nach Anspruch 1, **dadurch gekennzeichnet, dass** das Aufpfropfen von Gruppen, welche als Kettenübertragungsmittel fungieren können, auf die Oberfläche der Substrate derart erfolgt, dass man auf der Substratoberfläche bereits vorhandene funktionelle Gruppen mit einer organischen Verbindung reagieren lässt, welche unter Ringöffnung kovalent an die funktionellen Gruppen der Substrate bindet und gleichzeitig eine Gruppe, die als Kettenübertragungsmittel fungieren kann, erzeugt.

9. Verfahren nach Anspruch 8, **dadurch gekennzeichnet, dass** die auf der Oberfläche der Substrate vorhandenen funktionellen Gruppen Carboxylgruppen sind und die organische Verbindung ein Episulfid ist, welches eine eine Thiolfunktion umfassende Gruppe erzeugt.

10. Verfahren nach Anspruch 9, **dadurch gekennzeichnet, dass** das Episulfid ausgewählt ist aus Propylensulfid, Ethylensulfid, Cyclohexensulfid, Epithiodecan, Epithiododecan und 7-Thiabicyclo[4.1.0]heptan.

11. Verfahren nach Anspruch 9 oder Anspruch 10, **dadurch gekennzeichnet, dass** die Reaktion zwischen den auf der Substratoberfläche vorhandenen Carboxylgruppen und dem Episulfid unter Wärmezufuhr sowie in Gegenwart eines Katalysators, vorzugsweise eines tertiären Amins, durchgeführt wird.

12. Verfahren zur Verklebung von Substraten mittels eines Klebstoffs, welcher ein durch Kettenpolymerisation härtbares Harz umfasst, **dadurch gekennzeichnet, dass** es das Ausführen eines Verfahrens nach einem der Ansprüche 1 bis 11 umfasst.

13. Verfahren nach Anspruch 12, **dadurch gekennzeichnet, dass** das im Klebstoff enthaltene Harz ausgewählt ist aus Harzen, welche unter Einwirkung von Lichtstrahlung oder von ionisierender Strahlung polymerisiert werden können.

14. Verfahren nach Anspruch 13, **dadurch gekennzeichnet, dass** das im Klebstoff enthaltene Harz ausgewählt ist aus Epoxidacrylatharzen, Novolakacrylaten, Polyurethanacrylaten, Bismaleimiden und Epoxiden.

15. Verfahren nach einem der Ansprüche 12 bis 14, **dadurch gekennzeichnet, dass** die Substrate aus Epoxidharz oder aus einem Verbundmaterial in einer Epoxidmatrix bestehen, während das im Klebstoff enthaltene härtbare Harz ein Epoxidacrylatharz ist.

## Claims

1. Process for improving the mechanical strength of a bond between substrates when this bond is produced by means of an adhesive comprising a resin that can be cured by chain polymerization, **characterized in that** it comprises the grafting of groups capable of acting as chain transfer agents during the polymerization of said resin, to the surface of the substrates before the latter are brought into contact with the adhesive, these groups being chosen from carbon-based groups comprising an -I, -Br, -Cl, -F, -SH, -OH, -NH-, -NH₂, -PH-, -PH₂ or =S function.

2. Process according to Claim 1, **characterized in that** the groups capable of acting as chain transfer agents are carbon-based groups comprising a thiol (-SH) function.

3. Process according to Claim 1, **characterized in that** the grafting of the groups capable of acting as chain transfer agents to the surface of the substrates is carried out by reacting functional groups present at the surface of these substrates with an organic compound that contains a chemical function capable of reacting with said functional groups, and a group capable of acting as a chain transfer agent.

4. Process according to Claim 3, **characterized in that** the organic compound has, as a group capable of acting as a chain transfer agent, a group that comprises a thiol function.

5. Process according to Claim 4, **characterized in that**, when the functional groups present at the surface of the substrates are epoxide groups, the organic compound has, as a chemical function, a carboxyl function or a phenol function.

6. Process according to Claim 5, **characterized in that** the reaction of the epoxide groups present at the surface of the substrates with the organic compound having a carboxyl or phenol function is carried out at hot temperature, under vacuum and in the presence of a catalyst, preferably a tertiary amine.

7. Process according to Claim 5 or Claim 6, **characterized in that** the organic compound is chosen from thiomalic acid, thioglycolic acid, thiolactic acid, 3-mercaptopropionic acid, 11-mercaptoundecanoic acid, 16-mercaptohexadecanoic acid, 2-mercaptonicotinic acid, 6-mercaptonicotinic acid and 2-mercapto-4-methyl-5-thiazoleacetic acid.

8. Process according to Claim 1, **characterized in that** the grafting of the groups capable of acting as chain transfer agents to the surface of the substrates is carried out by reacting functional groups present at the surface of these substrates with an organic compound, which, by ring opening, covalently bonds to the functional groups of the substrates and simultaneously generates a group capable of acting as a chain transfer agent.

9. Process according to Claim 8, **characterized in that**, when the functional groups present at the surface of the substrates are carboxyl groups, the organic compound is an episulphide which generates a group comprising a thiol function.

10. Process according to Claim 9, **characterized in that** the episulphide is chosen from propylene sulphide, ethylene sulphide, cyclohexene sulphide, epithiodecane, epithiododecane and 7-thiabicyclo[4.1.0]heptane.

11. Process according to Claim 9 or Claim 10, **characterized in that** the reaction of the carboxyl groups present at the surface of the substrates with the episulphide is carried out at hot temperature and in the presence of a catalyst, preferably a tertiary amine.

12. Process for bonding substrates by means of an adhesive comprising a resin that can be cured by chain polymerization, **characterized in that** it comprises the implementation of a process according to any one of Claims 1 to 11.

13. Process according to Claim 12, **characterized in that** the resin present in the adhesive is chosen from resins that can be polymerized under the effect of ionizing or light radiation.

14. Process according to Claim 13, **characterized in that** the resin present in the adhesive is chosen from epoxy acrylate, novolac acrylate, polyurethane acrylate, bis-maleimide and epoxide resins.

15. Process according to any one of Claims 12 to 14, **characterized in that** the substrates are made of an epoxide resin or of a composite material having an epoxide matrix, whereas the curable resin present in the adhesive is an epoxy acrylate resin.
